# EUROPEAN PATENT SPECIFICATION

(11) **EP 4 504 452 B1**
(45) Date of publication and mention of the grant of the patent: **30.09.2026**
(21) Application number: 23748419.1
(22) Date of filing: 21.06.2023
(51) Int. Cl.: B24B 27/06

(54) **SYSTEMS AND METHODS FOR MEASURING A SIZE OF A CUTTING WHEEL**
SYSTEME UND VERFAHREN ZUM ABMESSEN EINES SCHNEIDRADES
SYSTEMES ET PROCEDES POUR MESURER LES DIMENSIONS D'UN DISQUE DE COUPE

(43) Date of publication of application: 12.02.2025
(73) Proprietor: Illinois Tool Works, Inc., Glenview, Illinois 60025 (US)
(72) Inventor: ZHANG, Ruibin, Glenview, Illinois 60025 (US); ZOU, Hengshan, Glenview, Illinois 60025 (US)
(74) Representative: HGF
(86) International application number: PCT/CN2023/101738
(87) International publication number: WO 2024/259639

(56) References cited:
- CN-A- 113 165 143
- DE-A1- 102013 113 202
- DE-A1- 102019 207 736
- US-A1- 2021 023 675

## Description

### BACKGROUND

Some cutting apparatuses perform cutting operations within an operating cavity. During cutting operations, a cutting wheel is used to cut a sample within the operating cavity. However, cutting the sample can cause the cutting wheel to grind down, which may change how the cutting wheel cuts the sample.

Accordingly, there is a need to provide systems and/or methods to measure changes in the cutting wheel during a cutting operation to ensure a cutting operation provides high quality samples. An example of a circular cutting device is described in WO2020/018650. An example a cutting apparatus comprising a system for measuring a change in diameter of a cutting wheel is known from CN 113 165 143 A.

### SUMMARY

The present disclosure provides systems and methods for a measuring system for a cutting apparatus. The cutting apparatus includes a housing defining an operating cavity, with a cutting wheel arranged in the operating cavity. A measuring system is configured to measure a change in diameter of the cutting wheel, the measuring system including one or more marks corresponding to a size of the cutting wheel. In examples, the diameter changes from a first diameter to a second diameter during operation of the cutting wheel, both of which can be measured by the measuring system.

### BRIEF DESCRIPTION OF DRAWINGS

FIG. 1 illustrates an example cutting apparatus including measuring systems for a cutting wheel, in accordance with aspects of this disclosure.
FIGS. 2A and 2B illustrate perspective views of an example cutting apparatus including measuring systems for a cutting wheel, in accordance with aspects of this disclosure.
FIGS. 3A and 3B illustrate detailed views of the example measuring systems and cutting wheel of FIGS. 1 to 2B, in accordance with aspects of this disclosure.
FIG. 4 illustrates an example method to detect a size of a cutting wheel in accordance with aspects of this disclosure.

### DETAILED DESCRIPTION

Disclosed example systems and methods for measuring a cutting wheel of a cutting apparatus are provided. In particular, the cutting apparatus includes a housing defining an operating cavity. A cutting wheel is arranged within the operating cavity. The cutting apparatus further includes a measuring system configured to measure a change in diameter of the cutting wheel, the measuring system including one or more marks corresponding to a size of the cutting wheel. In some examples, the one or more marks of the measuring system includes a first mark and a second mark corresponding to a first diameter and a second diameter, respectively, of the cutting wheel.

Abrasive cutting devices are used to perform sectioning sample materials, which can be used for testing of components. Abrasive cutting devices may have circular cutting wheels rotated at a high speed to section part of the sample. As the abrasive cutting device is used, the cutting wheel is consumed such that the diameter of the cutting wheel decreases as the cutting wheel is worn down. A change from a first diameter to a second (smaller) diameter changes how the cutting wheel sections the sample.

For example, changes in the diameter of the cutting wheel changes the point at which the edge of the wheel contacts the sample. Further, rotational speed of the cutting wheel at the point of contact changes as diameter of the cutting wheel changes. Such changes may impact the quality of the cut. In order to mitigate the impact of a changing cutting wheel diameter, an adjustment to one or more parameters of the cutting wheel can be made, such as a position and/or an orientation of the cutting wheel relative to the sample. The parameters can also include a rotational velocity of the cutting wheel (e.g., in rotations per minute (RPM)), or a power delivered to the cutting wheel (e.g., from a motor) to cause rotation. In order to accurately determine an amount of adjustment, an accurate measurement of the change in diameter or the cutting wheel is needed. Adjustments can be performed manually and/or by a control system. For instance, a user can observe a change in the cutting wheel diameter and input a number or amount of change in a user interface, which can be implemented by the control system. In some examples, one or more sensors can monitor the change and transmit the information to the control circuitry, to make adjustments to the parameters.

Disclosed example systems and methods provide a measurement system arranged at or near the cutting wheel to measure an absolute value of the diameter (e.g., from a geometric center of the cutting wheel), and/or amount of change in diameter (e.g., from a first to a second diameter). For instance, the measurement system may include a measuring device with one or more markings to provide a visual indication of the changing diameter. In some examples, the markings can be monitored by a sensor (e.g., an optical sensor, an infrared (IR) sensor, a magnetic sensor, etc.), which may be communicated to the control system, which can in turn determine an amount of adjustment to the cutting apparatus (e.g., position, orientation, speed, power of the cutting wheel). Such an adjustment can be implemented automatically by the control system and/or in response to a user interface, thereby providing a more consistent edge speed and improved consistency in cutting results.

Based on the measured diameter and/or measured change in the diameter or size of the cutting wheel, the cutting apparatus may determine an appropriate adjustment value, which may be further based on one or more factors, such as the sample material being cut, a part number of the material being cut, an abrasive material type on the abrasive cutting wheel, a concentration of the abrasive material on the abrasive cutting wheel, a thickness of the abrasive cutting wheel, a bonding agent material type, and/or a bonding agent material hardness, as a list of non-limiting examples. The diameter values and/or factors may be empirically determined and stored at the cutting apparatus (e.g., a lookup table stored at the control system). In some examples, the one or more factors can be determined by reading electronic indicia (e.g., a barcode, a quick response (QR) code, an RFID tag, a near field communications (NFC) tag, etc.) attached to the cutting wheel and/or the packaging of the cutting wheel, the sample, etc. For example, the cutting apparatus and/or control system may include a barcode reader, a QR code reader, an RFID reader, and/or an NFC reader to collect information regarding such factors.

Thus, the disclosed example systems and methods provide an improved cut quality and consistency, particularly as the life of the abrasive cutting wheel decreases. While the disclosed examples are described with reference to abrasive cutting devices and abrasive cutting wheels, the disclosed methods and apparatus may be adopted, modified, and/or used for other types of cutting devices, such as rotary tools and/or any other type of rotational cutting device that use consumable cutting wheels.

In disclosed examples, a cutting apparatus includes a housing defining an operating cavity; a cutting wheel arranged in the operating cavity; and a measuring system configured to measure a change in diameter of the cutting wheel, the measuring system including one or more marks corresponding to a size of the cutting wheel.

In some examples, the one or more marks of the measuring system includes a first mark and a second mark. In examples, the first mark corresponds to a first diameter and the second mark corresponds to a second diameter of the cutting wheel. In examples, the cutting wheel is configured to perform a cutting operation on a sample. In examples, a size of the cutting wheel changes from the first diameter to the second diameter during a cutting operation.

In some examples, there is a control system to determine the measurement from the measurement system before, during or after a cutting operation. In examples, there is a mount to secure the measuring system to a cover of the cutting wheel.

In some examples, a position or an orientation of the measuring system is fixed relative to the cutting wheel.

The measuring system is a substantially linear ruler, the one or more marks being provided on a surface of the linear ruler, wherein the linear ruler is arranged on a first side of the cutting wheel.

In examples, a platform to support a sample, wherein the cutting apparatus is configured to cut the sample on the platform. In examples, a door connected to the housing to open or close the operating cavity.

In some disclosed examples, a method for controlling a rotational velocity of a cutting device, including measuring, by a linear measuring device, a first diameter of a cutting wheel of the cutting device; conducting a cutting operation using the cutting wheel; measuring, by the linear measuring device, a second diameter of the cutting wheel during or after the cutting operation; and adjusting, by a control system, one or more operational parameters of the cutting wheel based on a difference between the first and second diameter.

In some examples, the one or more operational parameters of the cutting wheel includes a position, an orientation, a rotational velocity, or a power of the cutting wheel.

In some examples, the first or second diameter is measured in response to a user input or is based on an instruction from the control system. In examples, the first diameter is an initial diameter of the cutting wheel when the cutting device starts the cutting operation.

In examples, a type or amount of adjustment for the one or more operational parameters is based in part on a type of material of a sample being cut.

In some examples, the method includes comparing a change in diameter with one or more threshold values; and adjusting one or more operational parameters of the cutting device if the change in diameter is greater than the one or more threshold values.

In some examples, the method includes comparing the second diameter with one or more threshold values; and adjusting one or more operational parameters of the cutting device if the second diameter is greater than the one or more threshold values.

In some examples, the method includes mounting the measuring system to a cover of the cutting wheel, wherein a position or an orientation of the measuring system on the cover is fixed relative to the cutting wheel.

The method includes the measuring system is a substantially linear ruler, the one or more marks being provided on a surface of the linear ruler, wherein the linear ruler is arranged on a first side of the cutting wheel.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

For the purpose of promoting an understanding of the principles of the claimed technology and presenting its currently understood best mode of operation, reference will be now made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

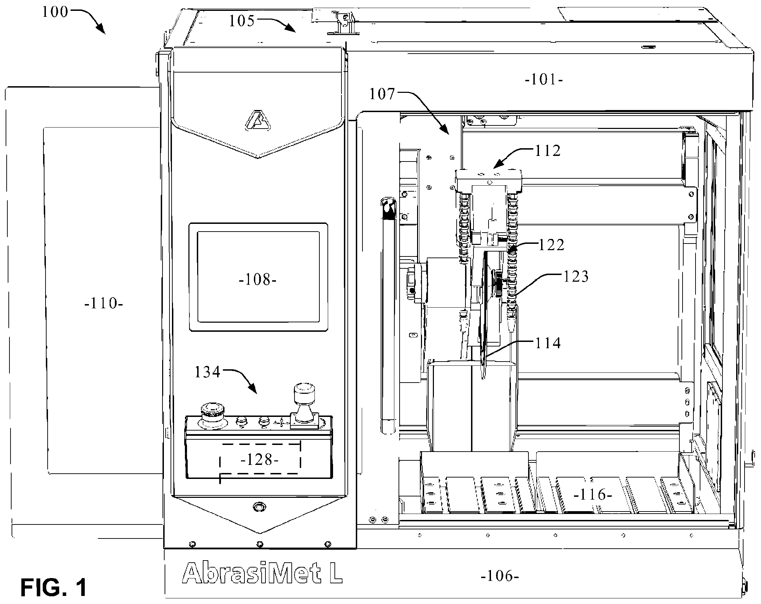

Turning to the drawings, FIGS. 1 to 3B illustrate a cutting apparatus 100, which includes a housing 101 and a door 110, and a measuring system 122 within. As shown, the housing 101 is substantially in the shape of a hollow square box with an operating cavity 107 within. The operating cavity 107 can be used to house a cutting tool 112 as shown, but may include one or more other devices for treating, preparing, testing, or otherwise modifying a sample, as a list of non-limiting examples.

The cutting tool 112 is configured to perform a cutting operation on a sample (not shown) within the operating cavity 107. The housing 101 includes a top 105 and a bottom 106 opposite to each other, the bottom 106 of the housing 101 being used to support on a ground or work surface. The housing 101 also includes a front portion 108, which may include one or more user interfaces 134 (e.g., a display, touchscreen, control knobs, levers, switches, etc.), and a rear portion opposite the front portion 108.

In some examples, the door 110 is configured to be movably disposed at the front portion 108 of the housing 101. As the door 110 moves relative to the housing 101 (e.g., left and right, up and down, in and out), the operating cavity 107 can be opened or closed. In the examples of FIGS. 1 to 2B, the door 110 is in an open position, and the door 110 is movable between the closed position and the open position along a length of the housing 101. When the door 110 is in the closed position, the door 110 closes the operating cavity 107 and the cutting apparatus 100 may perform a cutting operation. For example, the cutting tool 112 includes a cutting wheel 114 to cut or modify a sample. The cutting tool 112 and/or the cutting wheel 114 can be controlled (e.g., via one or more control circuits or system 128, in response to a user input at 134, etc.) to move (e.g., up/down, left/right) relative to the sample(s), which may be arranged on a platform 116. During the cutting operation, one or more nozzles 123 to deliver a fluid (e.g., coolant, gas, water, chemical wash, etc.) to the cutting surface of the sample, and can be configured to operate in synchrony with the cutting wheel 114. In some examples, the nozzles 123 can be mounted to the cutting tool 112, and can be secured by one or more flexible or semi-flexible conduits that can be manipulated to direct the fluid flow toward the cutting surface.

When the cutting operation is complete, the door 110 moves to its open position. When the door 110 is in the open position, the door 110 opens the operating cavity 107. For ease of description only, the upper and lower directions are referred to as a height from an underlying surface, the left and right directions are referred to as the length direction across which the door opens and closes, and the front and rear directions are referred to as from front portion or panel 108 to an opposing rear panel.

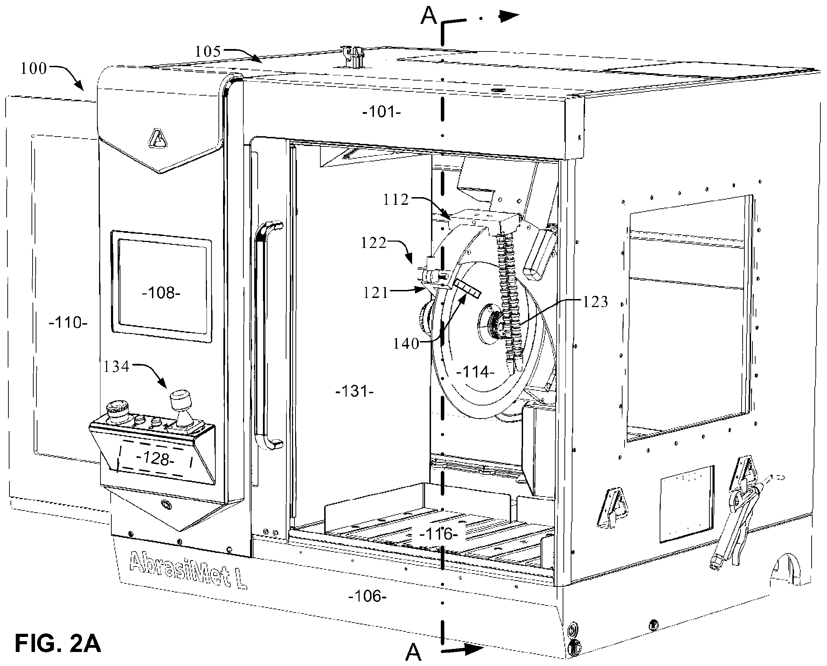

As shown in FIG. 2A, the measuring system 122 is secured to the cutting tool 112 by one or more mounting devices 121. Mounting devices 121 can include a fastener, a weld, a snap-fit connection, or can be formed integrally with a cover of the cutting tool 112, as a list of non-limiting examples. The measuring system 122 includes one or more measuring devices 140 configured to provide an indication of the size of the cutting wheel 114.

As shown in the example of FIG. 2A, the housing 101 also includes a divider 131 connected inside the housing 101 to divide the inside of the housing 101 to form an operating cavity 107 and a control chamber located to the left of the operating cavity 107. The control chamber is used to house the control system 128 (e.g., control and/or network circuitry, not shown in the figures) for controlling the cutting tool 112 and/or the measuring system 122. For instance, the control system 128 may receive commands from the user interface 134 and/or from a remote control device (e.g., a computer, a networked controller, etc.) to activate the cutting tool 112 and/or the measuring system 122.

The measuring system 122 could be used to provide an indication of the size of the cutting wheel 114 at various points during operation of the cutting apparatus 100. In some examples, the measuring device 140 can be used before, during, or after a cutting operation to measure a diameter of the cutting wheel 114. For instance, the measuring device 140 provides an indication of a change in diameter during a cutting operation, in addition to or in the alternative for an absolute diameter measurement of the cutting wheel 114. The size of the cutting wheel 114 may be determined continuously or periodically.

Moreover, a position or an orientation of the measuring device 140 can be adjusted manually and/or automatically (e.g., via a motorized actuator) in response to a control input (e.g., from the control system 128). Thus, the arrangement of the measuring device 140 can be adjusted along a side of the cutting wheel 114 (e.g., across a full or partial diameter of the cutting wheel 114), and/or to adjust an amount of distance between the measuring device 140 and a surface of the cutting wheel 114.

In some examples, the measuring system 122 is made of one or more suitable materials, such as metals, alloys, plastics, glass, etc., and/or the measuring device 140 may be made integrally with the measuring system 122 by a machining processing.

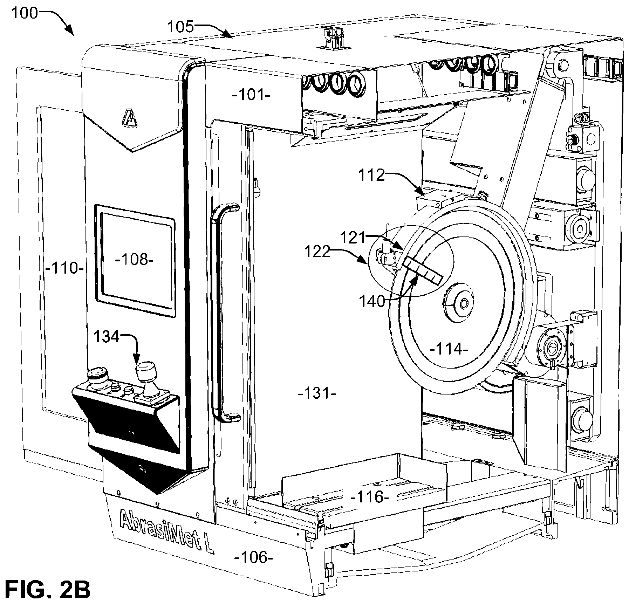

FIG. 2B illustrates a perspective view of the cutting apparatus 100 of FIGS. 1 and 2A, with a portion of the housing 101 removed along the A-A line in FIG. 2A.

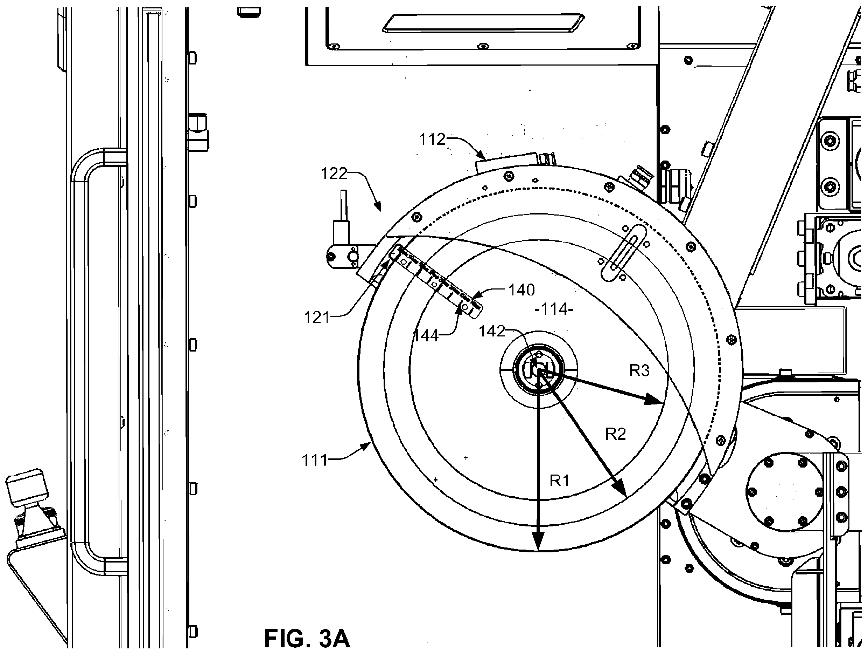

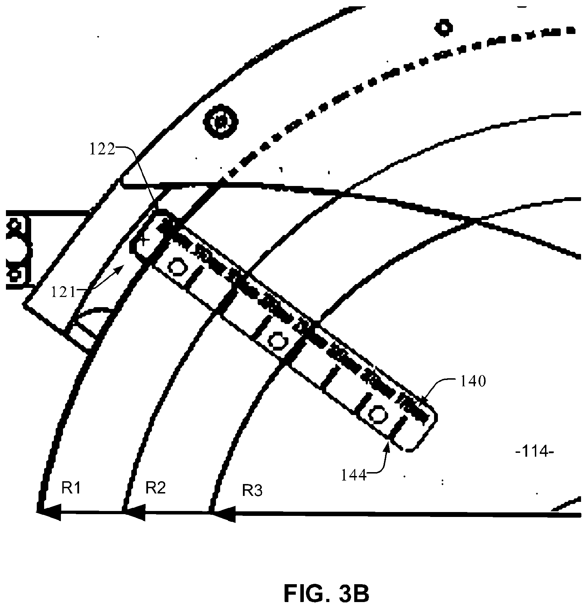

FIGS. 3A and 3B illustrate detailed views of the measuring system 122 as arranged relative to the cutting wheel 114. As shown, the cutting wheel 114 is defined by a central axis 142 about which the cutting wheel 114 rotates during a cutting operation. During a cutting operation, an outer cutting edge 111 of the cutting wheel 114 changes as it is ground down from cutting a sample. Thus, as the cutting wheel 114 wears down the radius will change from an initial or first radius R1 at a first time, to a second radius R2 at a second time during the cutting operation, to a third radius R3 (e.g., during or at the completion of the cutting operation). The initial radius of the cutting wheel 114 and the initial size of the cutting wheel 114 are known and/or measurable, thus subsequent sizes of the cutting wheel 114 can be measured or otherwise determined as the distance from the central axis 142 to the cutting edge 111 changes.

As shown, measuring device 140 is configured as a linear measuring device that includes one or more indicia 144 to provide a comparison with the cutting edge 111 to measure a radius of the cutting wheel 114. For example, discrete indicium 144 may correspond to one or more threshold radius values (e.g., R1, R2, R3, etc.), such that as the cutting edge 111 reaches such indicia, a visual comparison becomes clear as to the size of the cutting wheel 114.

Additionally or alternatively, the size of the cutting wheel may be determined by one or more sensors configured to read the indicia 144 and compare the indicia 144 to the position of the cutting edge 111. The sensors may include any variety of suitable sensors, such as sensors employing lasers, visible light, IR light, and/or sound to determine the size of the cutting wheel.

Such size measurements (and/or changes in size) can be provided to the control system 128 to adjust one or more parameters of the cutting wheel 114 and/or the cutting tool 112 (e.g., speed and/or position of the cutting wheel 114) to maintain a desired cutting action. For example, the control system 128 may regulate a power source to provide appropriate current and voltage to an actuator, such as a variable speed electric motor, that rotates the cutting wheel 114 about the central axis 142.

Although the size of the cutting wheel 114, and therefore the radius, will change continuously from R1 to R3 (or less) during a cutting operation, discrete radii R1, R2 and R3 are illustrated in the example figures for ease of explanation.

In some examples, the control system 128 estimates a diameter of the cutting wheel 114 based on the measurements and use of the cutting wheel 114. For example, a user may register a measured diameter of a new cutting wheel with the control system 128 via the I/O interface 134. Following the identification of the new cutting wheel 114 and determining the size of the cutting wheel 114 and/or the sample, the control system 128 tracks the size and/or use of the cutting wheel 114 and determines, based on a lookup table and/or an equation, one or more threshold values corresponding to a desired diameter, change in diameter, speed, etc. If the measured size or diameter violates the one or more threshold values, the control system 128 may adjust one or more operational parameters of the cutting apparatus 100.

The initial measurement provides the baseline for determining the diameter of the cutting wheel 114 at later times. At a later point(s) in time, the measuring device 140 may determine an amount the cutting wheel 114 has decreased in size. Accordingly, the cutting device 100 may be able to determine the diameter of the cutting wheel 114.

The measured diameter and/or change in diameter of the cutting wheel 114, and/or the status of the cutting wheel (e.g., green-within a first threshold value; yellow-outside the first threshold value but within a second threshold value; red-exceeding the second threshold value), may be displayed on the interface 134.

In some examples, the control system 128 may include processing circuitry, memory, input/output (I/O) or user interface(s) 134, and/or other circuitry. The processing circuitry may be any type of processor or logic circuitry that is capable of executing instructions stored in memory, and/or otherwise performing logic functions based on inputs. Example processors include central processing units (CPUs), systems-on-a-chip (SOCs), field programmable gate arrays (FPGAs), application-specific integrated circuits (ASICs), discrete logic, and/or any other type of controller, processor and/or, more generally, logic circuitry. The memory may comprise volatile and non-volatile memory, including mass storage devices. The circuitry may comprise various hardware circuitry that may be needed for operation of the control system 128.

The example interface 134 may include any type of input device, such as a keyboard, a pointing device (e.g., a mouse, a trackpad), a microphone, a camera (e.g., gesture-based input), a touchscreen, buttons that can be rotated and/or pushed, sliding knobs, and/or any other type of user input and/or output device. The example interface 134 includes any type of visual output device such as, for example, an LCD display, an LED display, etc., tactile feedback devices that may vibrate, audio output device such as speakers, and/or any other output devices that may be used to provide information or notice. The output interface may display, for example, status/commands that may be entered for the cutting apparatus 100.

For example, the interface 134 may be used to enter operational parameters for the cutting tool, such as, for example, the initial diameter of the cutting wheel, threshold diameter values, the desired surface speed, etc., at which an alert may be provided to an operator. The control system 128 may also allow tables to be downloaded, for example, to the cutting device 100.

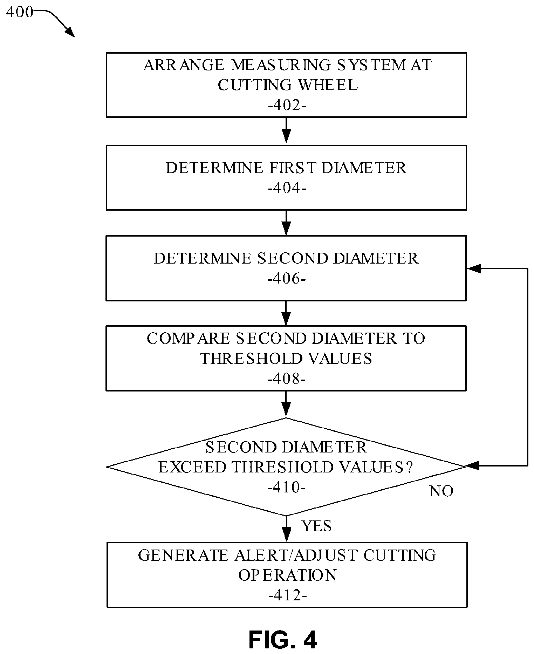

FIG. 4 illustrates an example method to detect a size of a cutting wheel in accordance with aspects of this disclosure. Referring to FIG. 4, there is shown a flow diagram 400 with blocks 402 to 410. The example method shown in the flow diagram 400 may be used to implement control circuitry of the control system 128 to control one or more operating parameters of the cutting apparatus 100. For instance, the example method may be implemented using machine readable instructions, which may be stored in memory and/or executed by the control system 128. The example method is described below with reference to the cutting apparatus 100 of FIGS. 1 to 3B.

In block 402, a measuring system is arranged at a cutting wheel. In block 404, a first diameter is determined by comparing an indicia of the measuring system with an edge of the cutting wheel (e.g., before or during a cutting operation). In block 406, a second diameter is determined by comparing the indicia of the measuring system with an edge of the cutting wheel (e.g., during or after a cutting operation). In block 408, the second diameter is compared against one or more threshold diameter values. In block 410, whether the second diameter exceeds the one or more threshold diameter values. If yes, the method continues to block 412, where an alert is generated and/or an adjustment to the cutting operation (e.g., speed, power, position, orientation, etc.) is made (e.g., via the control system 128). If no, the method returns to block 406 to continue monitoring changes in the cutting wheel diameter.

The size of the cutting wheel 114 may also be determined using any of the methods and/or techniques described in this disclosure, and/or any other methods and/or techniques that may be applicable for determining a size of the cutting wheel 114.

The disclosed measuring system has a simple structure that can be incorporated into an existing cutting apparatus (e.g. a retrofit), which requires modest modification to the existing cutting apparatus.

Various specific embodiments of the present application will be described below with reference to the attached drawings that form a part of the present specification. It should be understood that while terms denoting orientation, such as "front," "rear," "upper," "lower," "left," "right," "top," "bottom," "inside," "outside," etc., are used in the present application to describe various exemplary structural parts and elements of the present application, these terms are used herein for convenience of illustration only and are determined based on the exemplary orientations shown in the attached drawings. Since the embodiments disclosed in the present application may be disposed in different orientations, these terms denoting orientation are for illustrative purposes only and should not be considered as limiting.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

## Claims

1. A cutting apparatus (100) comprising:
a housing (101) defining an operating cavity (107);
a cutting wheel (114) arranged in the operating cavity (107); and
a substantially linear ruler (140) configured to measure a change in diameter of the cutting wheel (114), the linear ruler (140) including one or more marks corresponding to a size of the cutting wheel (114), the one or more marks being provided on a surface of the linear ruler (140), wherein the linear ruler (140) is arranged on a first side of the cutting wheel (114).

2. The cutting apparatus (100) according to claim 1, wherein the one or more marks of the linear ruler (140) includes a first mark and a second mark.

3. The cutting apparatus (100) according to claim 2, wherein the first mark corresponds to a first diameter and the second mark corresponds to a second diameter of the cutting wheel (114), for example wherein the cutting wheel (114) is configured to perform a cutting operation on a sample, or wherein a size of the cutting wheel (114) changes from the first diameter to the second diameter during a cutting operation.

4. The cutting apparatus (100) according to claim 1, further comprising a control system (128) to determine the measurement from the linear ruler (140) before, during or after a cutting operation.

5. The cutting apparatus (100) according to claim 1, further comprising a mount (121) to secure the linear ruler (140) to a cover of the cutting wheel.

6. The cutting apparatus (100) according to claim 1, wherein a position or an orientation of the linear ruler (140) is fixed relative to the cutting wheel (114).

7. The cutting apparatus (100) according to claim 1, further comprising a platform (116) to support a sample, wherein the cutting apparatus (100) is configured to cut the sample on the platform (116).

8. The cutting apparatus (100) according to claim 1, further comprising a door (110) connected to the housing (101) to open or close the operating cavity (107).

9. A method for controlling a rotational velocity of a cutting apparatus (100) according to any one of claims 1 to 8, the method comprising:
measuring, by the linear ruler (140), a first diameter of the cutting wheel (114) of the cutting apparatus (100);
conducting a cutting operation using the cutting wheel (114);
measuring, by the linear ruler (140), a second diameter of the cutting wheel (114) during or after the cutting operation; and
adjusting, by a control system (128), one or more operational parameters of the cutting wheel (114), one of said operational parameters being the rotational velocity of the cutting wheel (114), based on a difference between the first and second diameter.

10. The method according to claim 9, wherein the operational parameters of the cutting wheel (114) include a position, an orientation, or a power of the cutting wheel (114).

11. The method of claim 9, wherein the first or second diameter is measured in response to a user input or is based on an instruction from the control system (128).

12. The method of claim 9, wherein the first diameter is an initial diameter of the cutting wheel (114) when the cutting apparatus (100) starts the cutting operation.

13. The method of claim 9, wherein a type or amount of adjustment for the one or more operational parameters is based in part on a type of material of a sample being cut.

14. The method of claim 9, further comprising:
comparing a change in diameter with one or more threshold values; and
adjusting one or more operational parameters of the cutting apparatus (100) if the change in diameter is greater than the one or more threshold values.

15. The method of claim 9, further comprising:
comparing the second diameter with one or more threshold values; and
adjusting one or more operational parameters of the cutting apparatus (100) if the second diameter is greater than the one or more threshold values, or
further comprising: mounting the linear ruler (140) to a cover of the cutting wheel (114), wherein a position or an orientation of the linear ruler (140) on the cover is fixed relative to the cutting wheel (114).

## Patentansprüche

1. Schneidvorrichtung (100), aufweisend:
ein Gehäuse (101), das einen Arbeitshohlraum (107) definiert;
ein Schneidrad (114), das im Arbeitshohlraum (107) angeordnet ist; und
ein im Wesentlichen lineares Lineal (140), das konfiguriert ist, eine Änderung des Durchmessers des Schneidrads (114) zu messen, wobei das lineare Lineal (140) eine oder mehrere Markierungen umfasst, die einer Größe des Schneidrads (114) entsprechen, wobei die eine oder mehreren Markierungen auf einer Oberfläche des linearen Lineals (140) vorgesehen sind, wobei das lineare Lineal (140) auf einer ersten Seite des Schneidrads (114) angeordnet ist.

2. Schneidvorrichtung (100) nach Anspruch 1, wobei die eine oder mehreren Markierungen des linearen Lineals (140) eine erste Markierung und eine zweite Markierung umfassen.

3. Schneidvorrichtung (100) nach Anspruch 2, wobei die erste Markierung einem ersten Durchmesser entspricht und die zweite Markierung einem zweiten Durchmesser des Schneidrads (114) entspricht, beispielsweise wobei das Schneidrad (114) konfiguriert ist, einen Schneidvorgang an einer Probe durchzuführen, oder wobei eine Größe des Schneidrads (114) sich während eines Schneidvorgangs von dem ersten Durchmesser zu dem zweiten Durchmesser ändert.

4. Schneidvorrichtung (100) nach Anspruch 1, ferner aufweisend ein Steuersystem (128), um die Messung des linearen Lineals (140) vor, während oder nach einem Schneidvorgang zu bestimmen.

5. Schneidvorrichtung (100) nach Anspruch 1, ferner aufweisend eine Halterung (121), um das lineare Lineal (140) an einer Abdeckung des Schneidrads zu befestigen.

6. Schneidvorrichtung (100) nach Anspruch 1, wobei eine Position oder eine Ausrichtung des linearen Lineals (140) relativ zu dem Schneidrad (114) fixiert ist.

7. Schneidvorrichtung (100) nach Anspruch 1, ferner aufweisend eine Plattform (116) zum Tragen einer Probe, wobei die Schneidvorrichtung (100) konfiguriert ist, die Probe auf der Plattform (116) zu schneiden.

8. Schneidvorrichtung (100) nach Anspruch 1, ferner aufweisend eine Tür (110), die mit dem Gehäuse (101) verbunden ist, um den Arbeitshohlraum (107) zu öffnen oder zu schließen.

9. Verfahren zum Steuern einer Drehgeschwindigkeit einer Schneidvorrichtung (100) nach einem der Ansprüche 1 bis 8, das Verfahren aufweisend:
Messen eines ersten Durchmessers des Schneidrads (114) der Schneidvorrichtung (100) durch das lineare Lineal (140);
Ausführen eines Schneidvorgangs unter Verwendung des Schneidrads (114);
Messen eines zweiten Durchmessers des Schneidrads (114) während oder nach dem Schneidvorgang durch das lineare Lineal (140); und
Anpassen eines oder mehrerer Betriebsparameter des Schneidrads (114) durch ein Steuersystem (128), wobei einer der Betriebsparameter die Drehgeschwindigkeit des Schneidrads (114) ist, basierend auf einer Differenz zwischen dem ersten und zweiten Durchmesser.

10. Verfahren nach Anspruch 9, wobei die Betriebsparameter des Schneidrads (114) eine Position, eine Ausrichtung oder eine Leistung des Schneidrads (114) umfassen.

11. Verfahren nach Anspruch 9, wobei der erste oder zweite Durchmesser als Reaktion auf eine Benutzereingabe gemessen wird oder auf einer Anweisung des Steuersystems (128) basiert.

12. Verfahren nach Anspruch 9, wobei der erste Durchmesser ein Anfangsdurchmesser des Schneidrads (114) ist, wenn die Schneidvorrichtung (100) den Schneidvorgang beginnt.

13. Verfahren nach Anspruch 9, wobei eine Art oder ein Betrag der Einstellung für den einen oder die mehreren Betriebsparameter teilweise auf einer Art von Material einer zu schneidenden Probe basiert.

14. Verfahren nach Anspruch 9, ferner aufweisend:
Vergleichen einer Durchmesseränderung mit einem oder mehreren Schwellenwerten; und
Anpassen eines oder mehrerer Betriebsparameter der Schneidvorrichtung (100), wenn die Durchmesseränderung größer als ein oder mehrere Schwellenwerte ist.

15. Verfahren nach Anspruch 9, ferner aufweisend:
Vergleichen des zweiten Durchmessers mit einem oder mehreren Schwellenwerten; und
Anpassen eines oder mehrerer Betriebsparameter der Schneidvorrichtung (100), wenn der zweite Durchmesser größer als ein oder mehrere Schwellenwerte ist, oder
ferner aufweisend: Anbringen des linearen Lineals (140) an einer Abdeckung des Schneidrads (114), wobei eine Position oder eine Ausrichtung des linearen Lineals (140) an der Abdeckung relativ zu dem Schneidrad (114) fixiert ist.

## Revendications

1. Appareil de coupe (100) comprenant :
un logement (101) définissant une cavité de fonctionnement (107) ;
un disque de coupe (114) agencé dans la cavité de fonctionnement (107) ; et
une règle sensiblement linéaire (140) configurée pour mesurer un changement de diamètre du disque de coupe (114), la règle linéaire (140) comportant un ou plusieurs repères correspondant à une taille du disque de coupe (114), les un ou plusieurs repères étant prévus sur une surface de la règle linéaire (140), dans lequel la règle linéaire (140) est agencée sur un premier côté du disque de coupe (114).

2. Appareil de coupe (100) selon la revendication 1, dans lequel les un ou plusieurs repères de la règle linéaire (140) comportent un premier repère et un deuxième repère.

3. Appareil de coupe (100) selon la revendication 2, dans lequel le premier repère correspond à un premier diamètre et le deuxième repère correspond à un deuxième diamètre du disque de coupe (114), par exemple dans lequel le disque de coupe (114) est configuré pour réaliser une opération de coupe sur un échantillon, ou dans lequel une taille du disque de coupe (114) change du premier diamètre au deuxième diamètre pendant une opération de coupe.

4. Appareil de coupe (100) selon la revendication 1, comprenant en outre un système de commande (128) pour déterminer la mesure à partir de la règle linéaire (140) avant, pendant ou après une opération de coupe.

5. Appareil de coupe (100) selon la revendication 1, comprenant en outre un support (121) pour arrimer la règle linéaire (140) à un couvercle du disque de coupe.

6. Appareil de coupe (100) selon la revendication 1, dans lequel une position ou une orientation de la règle linéaire (140) est fixe par rapport au disque de coupe (114).

7. Appareil de coupe (100) selon la revendication 1, comprenant en outre une plateforme (116) pour soutenir un échantillon, dans lequel l'appareil de coupe (100) est configuré pour couper l'échantillon sur la plateforme (116).

8. Appareil de coupe (100) selon la revendication 1, comprenant en outre une porte (110) reliée au logement (101) pour ouvrir ou fermer la cavité de fonctionnement (107).

9. Procédé pour commander une vitesse de rotation d'un appareil de coupe (100) selon l'une quelconque des revendications 1 à 8, le procédé comprenant :
la mesure, par la règle linéaire (140), d'un premier diamètre du disque de coupe (114) de l'appareil de coupe (100) ;
la réalisation d'une opération de coupe en utilisant le disque de coupe (114) ;
la mesure, par la règle linéaire (140), d'un deuxième diamètre du disque de coupe (114) pendant ou après l'opération de coupe ; et
l'ajustement, par un système de commande (128), d'un ou de plusieurs paramètres fonctionnels du disque de coupe (114), l'un parmi lesdits paramètres fonctionnels étant la vitesse de rotation du disque de coupe (114), sur la base d'une différence entre le premier et le deuxième diamètre.

10. Procédé selon la revendication 9, dans lequel les paramètres fonctionnels du disque de coupe (114) comportent une position, une orientation ou une puissance du disque de coupe (114).

11. Procédé selon la revendication 9, dans lequel le premier ou le deuxième diamètre est mesuré en réponse à une entrée d'utilisateur ou est basé sur une instruction provenant du système de commande (128).

12. Procédé selon la revendication 9, dans lequel le premier diamètre est un diamètre initial du disque de coupe (114) lorsque l'appareil de coupe (100) commence l'opération de coupe.

13. Procédé selon la revendication 9, dans lequel un type ou une quantité d'ajustement pour les un ou plusieurs paramètres fonctionnels sont basés en partie sur un type de matériau d'un échantillon en cours de coupe.

14. Procédé selon la revendication 9, comprenant en outre :
la comparaison d'un changement de diamètre avec une ou plusieurs valeurs seuil ; et
l'ajustement d'un ou de plusieurs paramètres fonctionnels de l'appareil de coupe (100) si le changement de diamètre est supérieur aux une ou plusieurs valeurs seuil.

15. Procédé selon la revendication 9, comprenant en outre :
la comparaison du deuxième diamètre avec une ou plusieurs valeurs seuil ; et
l'ajustement d'un ou de plusieurs paramètres fonctionnels de l'appareil de coupe (100) si le deuxième diamètre est supérieur aux une ou plusieurs valeurs seuil, ou
comprenant en outre : le montage de la règle linéaire (140) sur un couvercle du disque de coupe (114), dans lequel une position ou une orientation de la règle linéaire (140) sur le couvercle est fixe par rapport au disque de coupe (114).
